Europäisches Patentamt

European Patent Office

Office européen des brevets

(11) Veröffentlichungsnummer: **0 042 912**
**A2**

(12) **EUROPÄISCHE PATENTANMELDUNG**

(21) Anmeldenummer: **81102153.4**

(22) Anmeldetag: **23.03.81**

(51) Int. Cl.³: **H 02 K 37/00**
**F 16 F 15/12**

(30) Priorität: **25.06.80 DE 3023655**

(43) Veröffentlichungstag der Anmeldung:
**06.01.82 Patentblatt 82/1**

(84) Benannte Vertragsstaaten:
**DE FR GB IT**

(71) Anmelder: **VDO Adolf Schindling AG**
**Gräfstrasse 103**
**D-6000 Frankfurt/Main(DE)**

(72) Erfinder: **Rüb, Walter**
**Neuenhainer Weg 15**
**D-6231 Sulzbach/Ts.(DE)**

(74) Vertreter: **Könekamp, Herbert, Dipl.-Ing.**
**Sodener Strasse 9**
**D-6231 Schwalbach(DE)**

(54) Dämpfungseinrichtung für einen Schrittmotor.

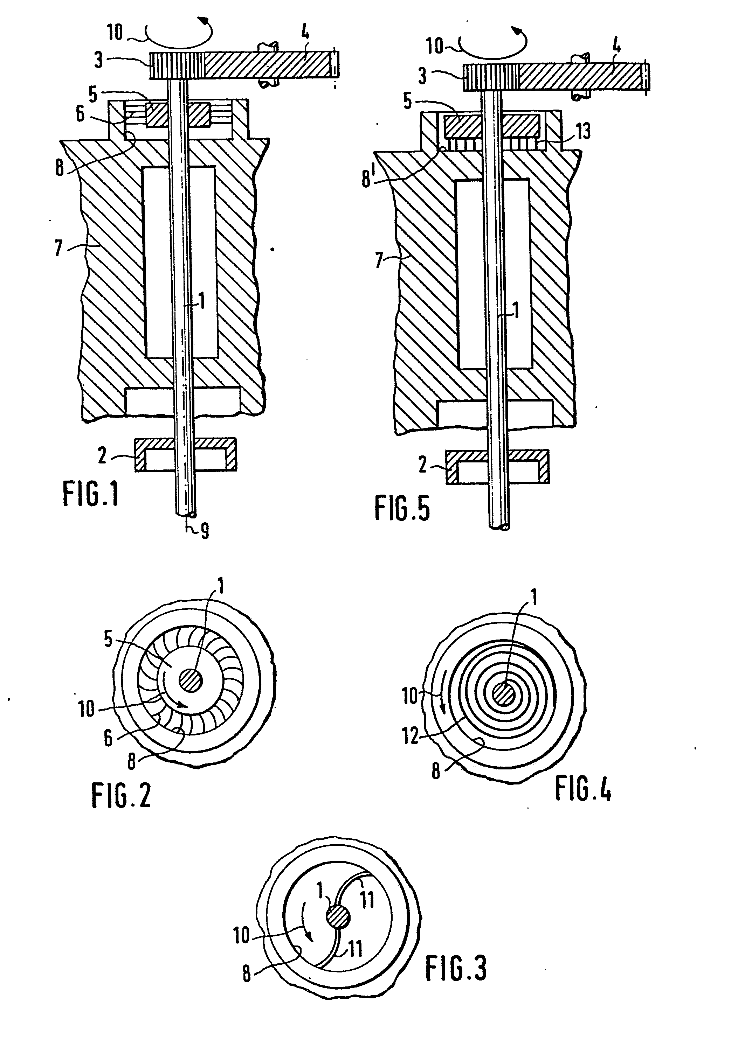

(57) Bei einer Einrichtung zur Dämpfung der Eigenschwingungen des Rotors (2) eines Schrittmotors ist am Rotor (2)
bzw. einem drehfesten Bauteil ein Reibelement (5) befestigt,
das mit Vorspannung an einer Reibfläche (8, 8') des drehfesten Bauteils bzw. des Rotors (2) in Anlage ist (Figur 1).

FIG.1

Croydon Printing Company Ltd.

VDO Adolf Schindling AG    - 1 -    6000 Frankfurt/Main
                                    Gräfstraße 103
                                    1521 Kl-kl

<u>Dämpfungseinrichtung für einen Schrittmotor</u>

Die Erfindung bezieht sich auf eine Einrichtung zur Dämpfung der Eigenschwingungen des Rotors eines Schrittmotors.

Eine derartige Einrichtung ist aus der DE-AS 25 27 046 bekannt. Zur Dämpfung der Eigenschwingungen des Rotors ist auf einer mit dem Rotor verbundenen Motorwelle eine Trägheitsmasse aus zumindest teilweise einem magnetisierbaren Werkstoff im Bereich des Magnetfelds des dauermagnetischen Rotors angeordnet. Dadurch entsteht eine magnetische Kupplung zwischen Rotor und Trägheitsmasse.

Erfolgt ein Schritt des Rotors, so kommt es danach zu einem, wenn auch gedämpften Einschwingen in die Ruhelage.

Treibt der Schrittmotor ein Aggregat, wie zum Beispiel eine Uhr, über ein Zahnradgetriebe an, so entstehen aufgrund des zwischen den Zahnrädern erforderlichen Zahnflankenspiels störende Geräusche durch das Aneinanderanschlagen der Zähne beim Einschwingen des Rotors in die Ruhelage. Eine Verringerung des Zahnflankenspiels ist aber begrenzt, da insbesondere bei Verwendung von Kunststofffrädern ein eine Wärmedehnung aufnehmendes Mindestspiel vorhanden sein muß.

Es ist daher Aufgabe der Erfindung, eine Einrichtung nach dem Oberbegriff zu schaffen, durch die ein Einschwingen des Rotors in seine Ruhelage weitgehend ohne Nachschwingen erfolgt.

Diese Aufgabe wird erfindungsgemäß dadurch gelöst, daß am Rotor bzw. einem drehfesten Bauteil ein Reibelement befestigt ist, das mit Vorspannung an einer Reibfläche des drehfesten Bauteils bzw. des Rotors in Anlage ist. Durch den Reibwiderstand der bei jedem Schritt des Rotors überwunden werden muß, wird ein Einschwingen in die Ruhelage vermieden.

Das Reibelement kann ein oder mehrere mit einem Ende befestigte, elastisch biegbare Arme aufweisen, die mit dem Bereich ihres freien Endes an der Reibfläche anliegen. Dabei kann durch Variation des elastischen Widerstands der biegbaren Arme ein unterschiedlicher Grad der Dämpfung erreicht werden. Ein solcher unterschiedlicher Grad der Dämpfung wird auch durch die Verwendung der verschiedensten Materialien für die Arme erreicht.

Vorteilhafterweise ist die Länge der Arme größer als der Abstand zwischen ihrem Fußbereich, an dem sie befestigt sind und der Reibfläche. Dadurch werden sie in bezug auf die Drehrichtung nach hinten abgebogen, wobei der Widerstand bei der Drehbewegung in Antriebsrichtung sehr gering gehalten werden kann, entgegen der Antriebsrichtung aber relativ groß ist. Ein Zurückschwingen nach einem durchgeführten Schritt wird damit weitgehend verhindert.

In einer vorteilhaften Ausbildung der Erfindung besitzt die Reibfläche eine zylindrische Form und ist koaxial zur Rotordrehachse angeordnet. Die Reibfläche kann dabei die mit dem Rotor verbundene Motorwelle im Abstand umschließen und das Reibelement auf der Motorwelle fest angeordnet sein. Eine derart rotationssymmetrisch ausgebildete Anordnung ist leicht und einfach herstellbar.

Das Reibelement kann eine Rundbürste mit radial abstehenden Borsten sein, die vorteilhafterweise gleichmäßig auf dem Umfang verteilt angeordnet sind. Durch das Material, die Anzahl, die Stärke und die Länge der Borsten kann die jeweils gewünschte Widerstandskraft in Antriebsrichtung und entgegen der Antriebsrichtung bestimmt werden.

In einer anderen Ausführungsform kann das Reibelement zwei sich gegenüberliegend angeordnete blattfederartige Arme aufweisen, die zum Beispiel aus einem gummielastischen Werkstoff bestehen können.

Eine weitere erfindungsgemäße Ausbildung besteht darin, daß das Reibelement eine mit ihrem inneren Ende an der Motorwelle befestigte und mit ihrem äußeren Bereich an der zylindrischen Reibfläche anliegende Spiralfeder ist. Die Radialkraft, mit der die Spiralfeder an der Reibfläche anliegt, bestimmt dabei den
Dämpfungsgrad. Ein Zurückschwingen des Rotors entgegen der Antriebsrichtung wird dabei dadurch behindert, daß sich die äußere Windung der Spiralfeder
fest an der Reibfläche anlegt und die Spiralfeder
in eine einen großen Widerstand hervorrufende Aufdrehrichtung belastet wird.

Neben den bisher beschriebenen radial ausgebildeten
Einrichtungen ist auch eine axial ausgebildete Einrichtung möglich, indem die Reibfläche in einer
Ebene rechtwinklig zur Rotordrehachse angeordnet
ist. Dabei kann in einer Ausführungsform die Reibfläche an einer Scheibe ausgebildet sein, die auf
einer mit dem Rotor verbundenen Motorwelle befestigt
ist, während in einer anderen Ausbildungsform die
Reibfläche an der Seitenfläche eines Sternzahnrades
ausgebildet sein kann, das auf einer mit dem Rotor
verbundenen Motorwelle befestigt ist. Das Reibelement kann dabei eine drehfest angeordnete Tellerbürste mit etwa axial zur Rotordrehachse gerichteten
Borsten sein. Auch bei dieser Ausbildungsform kann
die Dämpfung durch das Material, die Anzahl, die
Dicke und die Länge der Borsten unterschiedlich bestimmt werden. Außerdem ist es auch möglich, daß
jede Seitenfläche der Scheibe bzw. des Sternzahnrades als Reibfläche ausgebildet und jeweils eine
Tellerbürste daran in Anlage ist.

Ausführungsbeispiele der Erfindung sind in der Zeichnung dargestellt und werden im folgenden näher beschrieben. Es zeigen

Figur 1    eine erfindungsgemäße Einrichtung im
           Schnitt,

Figur 2    ein erstes Ausführungsbeispiel eines
           Reibelements in der Draufsicht,

Figur 3    ein zweites Ausführungsbeispiel eines
           Reibelements in der Draufsicht,

Figur 4    ein drittes Ausführungsbeispiel eines
           Reibelements in der Draufsicht,

Figur 5    eine erfindungsgemäße Einrichtung im
           Schnitt.

In den Figuren 1 und 5 ist an einem Ende einer Motorwelle 1 ein Rotor 2 eines Schrittmotors und am anderen
Ende ein Zahnrad 3 befestigt, das mit einem zweiten
Zahnrad 4 in Eingriff steht.

Auf der Motorwelle 1 ist ein Reibelement 5 fest angeordnet, das mit Borsten 6 versehen ist, die mit
ihren freien Enden mit Vorspannung an einer am Gehäuse 7 ausgebildeten Reibfläche 8 bzw. 8' in Anlage
sind.

Das in Figur 1 in der Seitenansicht dargestellte Reibelement 5 ist in Figur 2 in der Draufsicht zu sehen.
Dabei ist deutlich, daß die Borsten 6 eine größere
Länge besitzen, als es der Abstand zwischen ihrem
Fußbereich und der zylindrisch die Rotordrehachse 9
umschließenden Reibfläche 8 ist.

Dadurch sind die an sich radial ausgerichteten Borsten 6 entgegen der Antriebsrichtung 10 der Motorwelle 1 umgebogen. Der Widerstand ist dabei in Antriebsrichtung 10 relativ gering, während er entgegen der Antriebsrichtung 10 groß ist, da hierbei die Tendenz des Aufrichtens der umgebogenen Borsten 6 besteht. Ein Zurückschwingen des Rotors 2 entgegen der Antriebsrichtung nach einem Schritt wird daher weitgehend verhindert.

Das Reibelement nach Figur 3 arbeitet im Prinzip genauso und ist auch auf gleiche Weise eingebaut. Unterschiedlich ist nur, daß anstatt von Borsten zwei sich radial gegenüberliegende, blattfederartige Arme 11 aus einem gummielastischen Werkstoff angeordnet sind. Durch die Reibung zwischen den freien Enden der Arme 11 und der zylindrischen Reibfläche 8 ergibt sich eine Dämpfung der Antriebsdrehbewegung der Motorwelle 1. Entgegen der Antriebsrichtung ist die Dämpfung wesentlich höher, da die Arme 11, wie in Figur 2, entgegen der Antriebsrichtung abgebogen sind.

In Figur 4 besteht das Reibelement aus einer Spiralfeder 12, die mit ihrem radial inneren Ende an der Motorwelle 1 befestigt wird und mit ihrer äußeren Windung unter Vorspannung an einer zylindrisch zur Rotordrehachse koaxialen Reibfläche 8 in Anlage ist.

In Antriebsrichtung 10 ist auch bei diesem Reibelement der Widerstand gering, während er entgegen der Antriebsrichtung 10 relativ hoch ist, da dabei die Spiralfeder 12 in sich öffnende Richtung verdreht und dadurch radial gegen die Reibfläche 8 verspannt wird.

In Figur 5 ist das Reibelement ebenfalls auf der Motorwelle 1 fest angeordnet. Die Reibfläche 8' befindet sich aber in einer Ebene rechtwinklig zur Rotordrehachse 9. Dementsprechend sind die als Borsten 13 ausgebildeten elastisch biegbaren Arme des Reibelements etwa axial zur Rotordrehachse 9 gerichtet und liegen wie auch die Borsten 6 in Figur 1 und 2 entgegen der Antriebsrichtung 10 abgebogen an der Reibfläche 8' an. Die Arbeitsweise dieser in Figur 5 dargestellten Dämpfungseinrichtung entspricht der Dämpfungseinrichtung der Figuren 1 und 2.

Patentansprüche


1. Einrichtung zur Dämpfung der Eigenschwingungen des Rotors eines Schrittmotors, dadurch gekennzeichnet, daß am Rotor (2) bzw. einem drehfesten Bauteil ein Reibelement (5) befestigt ist, das mit Vorspannung an einer Reibfläche (8, 8') des drehfesten Bauteils bzw. des Rotors (2) in Anlage ist.

2. Einrichtung nach Anspruch 1, dadurch gekennzeichnet, daß das Reibelement (5) ein oder mehrere mit einem Ende befestigte, elastisch biegbare Arme aufweist, die mit dem Bereich ihres freien Endes an der Reibfläche (8, 8') anliegen.

3. Einrichtung nach Anspruch 2, dadurch gekennzeichnet, daß die Länge der Arme größer ist, als der Abstand zwischen ihrem Fußbereich, an dem sie befestigt sind, und der Reibfläche (8, 8').

4. Einrichtung nach einem der vorhergehenden Ansprüche, dadurch gekennzeichnet, daß die Reibfläche (8) eine zylindrische Form besitzt und koaxial zur Rotordrehachse (9) angeordnet ist.

5. Einrichtung nach Anspruch 4, dadurch gekennzeichnet, daß die Reibfläche (8), die mit dem Rotor (2) verbundene Motorwelle (1) im Abstand umschließt und das Reibelement auf der Motorwelle (1) fest angeordnet ist.

6. Einrichtung nach Anspruch 5, dadurch gekennzeichnet, daß das Reibelement eine Rundbürste mit radial abstehenden Borsten (6) ist.

7. Einrichtung nach Anspruch 6, dadurch gekennzeichnet, daß die Borsten (6) gleichmäßig auf dem Umfang verteilt angeordnet sind.

8. Einrichtung nach Anspruch 6, dadurch gekennzeichnet, daß das Reibelement zwei sich radial gegenüberliegend angeordnete, blattfederartige Arme (11) aufweist.

9. Einrichtung nach Anspruch 8, dadurch gekennzeichnet, daß die Arme (11) aus einem gummielastischen Werkstoff bestehen.

10. Einrichtung nach Anspruch 6, dadurch gekennzeichnet, daß das Reibelement eine mit ihrem inneren Ende an der Motorwelle (1) befestigte und mit ihrem äußeren Bereich an der zylindrischen Reibfläche (8) anliegende Spiralfeder (12) ist.

11. Einrichtung nach einem der Ansprüche 1 bis 3, dadurch gekennzeichnet, daß die Reibfläche (8') in einer Ebene rechtwinklig zur Rotordrehachse (9) angeordnet ist.

12. Einrichtung nach Anspruch 11, dadurch gekennzeichnet, daß die Reibfläche an einer Scheibe ausgebildet ist, die auf einer mit dem Rotor verbundenen Motorwelle befestigt ist.

13. Einrichtung nach Anspruch 11, _dadurch gekennzeichnet_, daß die Reibfläche an der Seitenfläche eines Stirnzahnrades ausgebildet ist, das auf einer mit dem Rotor verbundenen Motorwelle befestigt ist.

14. Einrichtung nach Anspruch 12 oder 13, _dadurch gekennzeichnet_, daß das Reibelement eine drehfest angeordnete Tellerbürste mit etwa axial zur Rotordrehachse gerichteten Borsten ist.

15. Einrichtung nach Anspruch 14, _dadurch gekennzeichnet_, daß jeder Seitenfläche der Scheibe bzw. des Stirnzahnrades als Reibfläche ausgebildet und jeweils eine Tellerbürste daran in Anlage ist.

FIG.1

FIG.5

FIG.2

FIG.4

FIG.3